# EUROPEAN PATENT APPLICATION

(11) **EP 3 098 287 A1**
(43) Date of publication of application: **30.11.2016**
(21) Application number: 15740687.7
(22) Date of filing: 20.01.2015
(51) Int. Cl.: C10G 11/05, C10G 11/18

(54) **FLUID CATALYTIC CRACKING PROCESS FOR HEAVY OIL**

(30) Priority: 24.01.2014 JP 2014011632
(71) Applicant: JX Nippon Oil & Energy Corporation, Chiyoda-ku Tokyo 100-8162 (JP)
(72) Inventor: ONO, Hideki, Chiyoda-ku, Tokyo 1008162 (JP); OHUCHI, Tai, Chiyoda-ku, Tokyo 1008162 (JP); IWAMA, Marie, Chiyoda-ku, Tokyo 1008162 (JP); ISHIZUKA, Tatsushi, Chiyoda-ku, Tokyo 1008162 (JP)
(74) Representative: Gilani, Anwar
(86) International application number: PCT/JP2015/051347
(87) International publication number: WO 2015/111566

(57) **Abstract**

Provided is a process for fluid catalytic cracking of a heavy oil by contacting the oil with a catalyst at an elevated temperature for a short period of time to produce light olefins such as propylene and butene. The process comprises contacting the heavy oil with a catalyst comprising as a constituent thereof a fluid catalytic cracking catalyst with a weight ratio (Wmat/Wusy) of an active matrix weight (Wmat) to an ultrastable Y type zeolite weight (Wusy) of 0 to 0.3, under conditions where the reaction zone outlet temperature is from 580 to 630°C, the catalyst/oil ratio is from 15 to 40 weight/weight and the residence time of hydrocarbon in the reaction zone is from 0.1 to 1.0 second.

## Description

### Technical Field

The present invention relates to a process for fluid catalytic cracking of a heavy oil, specifically to a fluid catalytic cracking process to produce light olefins such as propylene, butene or the like from a heavy oil at a high yield.

### Background Art

In a conventional fluid catalytic cracking process, petroleum-derived hydrocarbons are catalytically cracked with a catalyst to produce gasoline as the main product, a small amount of LPG and a cracked gas oil, and coke deposited on the catalyst is then burnt off with air to regenerate and recycle the catalyst.

In recent years, however, there has been a tendency to use a fluid catalytic cracking unit as a unit for producing light olefins (particularly propylene) for use as petrochemical raw materials not as a unit for producing gasoline. Whilst, propylene, butene and the like are raw materials of alkylate and methyl-t-butyl ether (MTBE) that are high-octane gasoline blending stocks. Such utilization of a fluid catalytic cracking unit for producing olefins is economically advantageous particularly to an oil refinery where a petroleum refining facility and a petrochemical facility are highly closely combined.

Examples of methods for producing light olefins by fluid catalytic cracking of a heavy oil include those comprising contacting a feedstock with a catalyst for a shortened period of time (Patent Literatures 1 to 4), that comprising carrying out a cracking reaction at elevated temperatures (Patent Literature 5), and those comprising using pentasyl type zeolites (Patent Literatures 6 and 7).

However, these methods cannot still be enhanced in light olefin selectivity sufficiently. For example, the methods where cracking is carried out at elevated temperatures accompany thermal cracking of a heavy oil, resulting in an increase in the unnecessary dry gas yield and thus sacrifice the yield of useful light olefins. Furthermore, the reaction at elevated temperatures increases the production of diene and thus has a drawback that the gasoline produced together with light olefins would be poor in quality. The method where the reaction is carried out for a shortened contact time can suppress a hydrogen transfer reaction and thus decrease the conversion rate of light olefins to light paraffins but is still insufficient in the yield of light olefins because it cannot enhance the conversion rate of a heavy oil to light olefins. Alternatively, a method has been proposed, in which the techniques such as those involving an elevated temperature reaction, a higher catalyst/oil ratio and a shortened contact time are combined to suppress thermal cracking and still achieve a high conversion rate to olefins (Patent Literature 8), but the light olefin yield cannot be deemed sufficient. The methods using a pentasyl type zeolite only enhance the yield of light olefins by excessively cracking the resulting gasoline and thus have drawbacks that the light olefin yield is not sufficient and the gasoline yield is significantly decreased. It is, therefore, difficult to produce light olefins at a high yield from a heavy oil with these methods.

A method has been proposed in which in addition to the elevated temperature reaction, higher catalyst/oil ratio, and shortened contact time, the reaction zone is a downflow type reaction zone that suppresses back mixing of a feedstock and the content of a rare-earth metal oxide in a fluid catalytic cracking catalyst and the mix ratio of an additive containing a shape selectivity zeolite are adjusted to further enhance the light olefin yield (Patent Literature 9). However, when the fluid catalytic cracking catalyst is insufficient in activity, these methods lack in cracking of a heavy feedstock and thus have not achieved the maximization of the light olefin yield.

### Citation List

### Patent Literature

Patent Literature 1: U.S. Patent No. 4,419,221
Patent Literature 2: U.S. Patent No. 3,074,878
Patent Literature 3: U.S. Patent No. 5,462,652
Patent Literature 4: Europe Patent No. 315,179A
Patent Literature 5: U.S. Patent No. 4,980,053
Patent Literature 6: U.S. Patent No. 5,326,465
Patent Literature 7: Japanese Patent Laid-Open Translation No. 7-506389
Patent Literature 8: Japanese Patent Application Laid-Open Publication No. 10-60453
Patent Literature 9: Japanese Patent No. 3948905

### Summary of Invention

### Technical Problem

The present invention has an object to provide a process for fluid catalytic cracking of heavy oil which can produce light olefins at a high yield and decrease the amount of dry gas generated by thermal cracking with a specific combination of a reaction mode, reaction conditions, a catalyst and the like.

### Solution to Problem

As the results of extensive studies focusing on the production of light olefins at a high yield in a process for fluid catalytic cracking of a heavy oil by contacting the oil with a catalyst at an elevated temperature for a short period of time to produce light olefins such as propylene and butene, the present invention has been accomplished on the basis of the finding that the above object is achieved by fluid catalytic cracking of a heavy oil using a catalyst containing a specific fluid catalytic cracking catalyst under specific conditions.

That is, the present invention relates to a process for fluid catalytic cracking of a heavy oil to produce light olefins, comprising contacting the heavy oil with a catalyst comprising as a constituent thereof a fluid catalytic cracking catalyst with a weight ratio (Wmat/Wusy) of an active matrix weight (Wmat) to an ultrastable Y type zeolite weight (Wusy) of 0 to 0.3, under conditions where the reaction zone outlet temperature is from 580 to 630°C, the catalyst/oil ratio is from 15 to 40 weight/weight and the residence time of hydrocarbon in the reaction zone is from 0.1 to 1.0 second.

The present invention also relates to the foregoing process for fluid-catalytic cracking of heavy oil wherein the catalyst comprises 50 to 95 percent by mass of the fluid catalytic cracking catalyst and 5 to 50 percent by mass of an additive comprising a shape selectivity zeolite.

The present invention also relates to the foregoing process for fluid-catalytic cracking of heavy oil wherein the content of the ultrastable Y type zeolite in the fluid catalytic cracking catalyst is from 5 to 50 percent by mass.

The present invention also relates to the foregoing process for fluid-catalytic cracking of heavy oil wherein the ultrastable Y type zeolite has a crystal lattice constant of 24.20 to 24.60Å.

The present invention also relates to the foregoing process for fluid-catalytic cracking of heavy oil wherein the content of a rare-earth metal oxide in the fluid catalytic cracking catalyst is 1.5 percent by mass or less.

The present invention also relates to the foregoing process for fluid-catalytic cracking of heavy oil wherein a fluid catalytic cracking reactor having a downflow type reaction zone, a gas-solid separation zone, a stripping zone and a catalyst regeneration zone is used.

### Advantageous Effect of Invention

The present invention can produce light olefins such as propylene and butene at a high yield with a less amount of dry gas generated by thermal cracking.

### Brief Description of Drawing

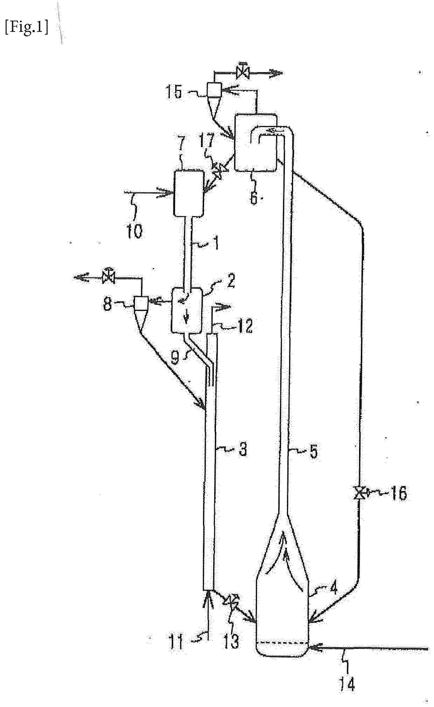

FIG. 1 shows an example of a fluid catalytic cracking reactor having a downflow type reaction zone, a gas-solid separation zone, a stripping zone and a catalyst regeneration zone.

### Description of Embodiments

The present invention will be described in detail below.

The present invention is a process for fluid catalytic cracking of heavy oil to produce light olefins. In the present invention, fluid catalytic cracking is referred to as a process wherein a heavy oil is continuously brought into contact with a catalyst that is maintained in a fluidized state to be cracked to light olefins and light hydrocarbons mainly composed of gasoline.

The fluid catalytic cracking unit used herein may be a fluid catalytic cracking unit having a reaction zone, a gas-solid separation zone, a stripping zone and a catalyst regeneration zone.

The reaction zone may be, for example, a so-called riser reaction zone wherein both catalyst particles and a feedstock ascend through a pipe or a downflow type (downer) reaction zone wherein both catalyst particles and a feedstock descend through a pipe.

However, when a usual riser reaction zone is used, back mixing may occur, causing locally a long residence time of gas and thus thermal cracking could be accompanied. In particular, when the catalyst/oil ratio is extremely larger than that of a usual fluid catalytic cracking process, like the present invention, the scale of back mixing becomes large. Thermal cracking is not preferable because it increases the amount of unnecessary generated dry gas and decrease the yields of the intended light olefins and gasoline. A downflow type (downer) reaction zone wherein both catalyst particles and a feedstock descend through a pipe is, therefore, preferably used in the present invention.

The cracked reaction mixture comprising a mixture of a cracked reaction product having been subjected to fluid catalytic cracking in the reaction zone, an unreacted product and the used catalyst is then forwarded to a gas-solid separation zone, in which most of the hydrocarbons comprising the cracked reaction product and unreacted product are removed from the catalyst particles. If necessary, the cracked reaction mixture is quenched immediately upstream or immediately downstream of the gas-solid separation zone so as to suppress unnecessary thermal cracking or excessive cracking.

The used catalyst from which most of the hydrocarbons have been removed is then forwarded to the stripping zone to remove the hydrocarbons that have not been removed in the gas-solid separation zone using gas for stripping. After the used catalyst and hydrocarbons are separated in this manner, the used catalyst having carbonaceous materials and a portion of heavy hydrocarbons deposited thereon is forwarded from the stripping zone to the catalyst regeneration zone to regenerate the used catalyst. In the catalyst regeneration zone, the used catalyst is regenerated by being subjected to oxidation to remove the carbonaceous material and heavy hydrocarbons deposited and adhered on the catalyst. The catalyst having been regenerated by oxidation is again forwarded to the reaction zone and continuously recycled thereto.

FIG. 1 shows an example of a fluid catalytic cracking reactor having a downflow mode reaction zone, a gas-solid separation zone, a stripping zone and a catalyst regeneration zone. The present invention will be described with reference to FIG. 1 below.

A heavy oil that is a feedstock is supplied through a line 10 to a mixing area 7, in which it is mixed with a regenerated catalyst recycled from a catalyst reservoir 6. The mixture flows co-currently down through a reaction zone 1, during which the feed heavy oil and the catalyst contact each other at an elevated temperature for a short period of time so as to crack the heavy oil. The cracked reaction mixture flows from the reaction zone 1 downwardly to a gas-solid separation zone 2 located below the reaction zone 1, in which the used catalyst is separated from the cracked reaction product and unreacted materials and then led through a dipleg 9 to an upper portion of a stripping zone 3.

Hydrocarbon gas from which a majority of the used catalyst have been removed is then led to a secondary separator 8. In this separator, a slight amount of the used catalyst remaining in the hydrocarbon gas is removed, and the hydrocarbon gas is extracted out of the system to be recovered. The secondary separator 8 is preferably a tangential cyclone.

The used catalyst in the stripping zone 3 is brought into contact with gas for stripping introduced from a line 11 to remove hydrocarbons deposited and remaining on and between the catalyst particles. The stripping gas may be an inert gas such as steam generated from a boiler and nitrogen pressurized with a compressor.

The stripping conditions are usually those including a temperature of 500 to 900°C, preferably 500 to 700°C and a residence time of the catalyst particles of 1 to 10 minutes. In the stripping zone 3, the cracked reaction products and unreacted materials deposited and remaining on the used catalyst are removed and extracted out of the stripping zone 3 through a line 12 extending from the top thereof together with the stripping gas to be led to a recovery system. Whilst, the used catalyst having been stripped is fed to the catalyst regeneration zone 4 through a line provided with a first flow rate regulator 13.

The gas superficial velocity in the stripping zone 3 is usually maintained in the range of preferably 0.05 to 0.4 m/s, thereby forming the fluidized bed in the stripping zone into a bubbling fluidized bed. A bubbling fluidized bed is relatively slow in gas velocity and thus can decrease the consumption of stripping gas and is relatively large in bed density and thus can significantly extend the pressure control range of the first flow rate regulator 13, resulting in easy transfer of the catalyst particles from the stripping zone 3 to the catalyst regeneration zone 4. The stripping zone 3 may be provided with horizontal porous plates or other inserts disposed in a multi-step manner so as to make a good contact between the used catalyst and the stripping gas thereby improving the stripping efficiency.

The catalyst regeneration zone 4 is segmented to an upper conical section and a lower cylindrical vessel section, the upper conical section being communicated with an upright tube (riser type regenerator) 5. Preferably, the catalyst regeneration zone 4 has an upper conical section with an apex angle of usually 30 to 90 degrees and a height of 1/2 to 2 times of the diameter of the lower cylindrical section. While the used catalyst supplied from the stripping zone 3 to the catalyst regeneration zone 4 is fluidized with regeneration gas (typically air such as oxygen-containing gas) introduced from the bottom thereof, it is regenerated by burning off substantially all of the carbonaceous materials and heavy hydrocarbons deposited on the catalyst surfaces. The regeneration conditions are usually those including a temperature of 600 to 1000°C, preferably 650 to 750°C, a catalyst residence time of 1 to 5 minutes and a gas superficial velocity of preferably 0.4 to 1.2 m/s.

The regenerated catalyst regenerated in the regeneration zone 4 and flying out from an upper portion of a turbulent fluid bed is transferred from the upper conical section to a riser type regenerator 5 by being accompanied with the used regeneration gas. The riser type regenerator 5 communicating with the upper conical section of the catalyst regenera
tion zone 4 has a diameter that is preferably 1/6 to 1/3 of the diameter of the lower cylindrical portion. Whereby, the gas superficial velocity of the fluidized bed in the catalyst regeneration zone 4 can be kept to be in the range of 0.4 to 1.2 m/s that is suitable for the formation of turbulent fluidized bed and the gas superficial velocity of the riser type regenerator 5 can be kept to be in the range of 4 to 12 m/s that is suitable for transferring upwardly the regenerated catalyst.

The regenerated catalyst ascending through the riser type regenerator 5 is conveyed to a catalyst reservoir 6 disposed on the top of the riser type regenerator. The catalyst reservoir 6 also functions as a gas-solid separator, in which the used regeneration gas containing carbon dioxide is separated from the regenerated catalyst and discharged through the cyclone 15 out of the system.

Whilst, the regenerated catalyst in the catalyst reservoir 6 is supplied to a mixing area 7 through a downward flow pipe provided with a second flow rate regulator 17. If necessary, for the easy control of the catalyst circulation rate in the riser type regenerator 5, the regenerated catalyst in the catalyst reservoir 6 may be partially returned to the catalyst regeneration zone 4 via a bypass conduit provided with a third flow rate regulator 16. In this manner, the catalyst is circulated in the system in the order of the downflow type reaction zone 1, the gas-solid separation zone 2, the stripping zone 3, the catalyst regeneration zone 4, the riser type regenerator 5, the catalyst reservoir 6 and the mixing area 7 and again the downflow type reaction zone 1.

Examples of the heavy oil used in the present invention include a vacuum gas oil, an atmospheric residue, a vacuum residue, a thermal cracked gas oil and a heavy oil produced by hydrorefining any of these oils. These heavy oils may be used alone or in combination or may be a mixture of any of these heavy oil and a minor portion of a light oil.

The heavy oil used as the feedstock has distillation characteristics of a boiling point range of preferably 170 to 800°C, more preferably 190 to 780°C.

The "reaction zone outlet temperature" referred herein is an outlet temperature of the reaction zone and is a temperature immediately before separation of the cracked reaction product from the catalyst or immediately before quenching thereof in the case where they are quenched immediately upstream of the gas-solid separation zone. The reaction zone outlet temperature in the present invention is in a range of 580 to 630°C, preferably 590 to 620°C. If the temperature is lower than 580°C, light olefins will not be produced at a high yield while if the temperature is higher than 630°C, thermal cracking will occur remarkably, causing an increase in the amount of generated dry gas.

The catalyst/oil ratio referred herein is a ratio of the catalyst circulation rate (ton/h) and the feedstock feeding rate (ton/h). In the present invention, the catalyst/oil ratio is necessarily 15 to 40 weight/weight, preferably 20 to 30 weight/weight. If the catalyst/oil ratio is smaller than 15 weight/weight, the temperature of the regenerated catalyst to be supplied to the reaction zone will be increased due to the heat balance, causing an increase in the amount of dry gas generated by thermal cracking. If the catalyst/oil ratio is greater than 40 weight/weight, the catalyst circulation rate will increase and thus the capacity of the catalyst regeneration zone will be undesirably too large to secure a catalyst residence time needed to regenerate the catalyst in the catalyst regeneration zone.

The residence time of hydrocarbons referred herein is either a time from the start of contact of the catalyst and feedstock till the separation of the catalyst from the resulting cracked reaction product in the reaction zone outlet or a time from the start of contact of the catalyst and feedstock till the quenching if the cracked reaction product is quenched immediately upstream of the gas-solid separation zone. In the present invention, the residence time is necessarily 0.1 to 1.0 second, preferably 0.2 to 0.7 second. If the residence time of hydrocarbon in the reaction zone is shorter than 0.1 second, the cracking reaction will be insufficient, resulting in a failure to produce light olefins at a high yield. If the residence time is longer than 1.0 second, thermal cracking involves too much.

No particular limitation is imposed on the operating conditions of the fluid catalytic cracking reactor in the present invention other than those described above, which is usually operated at a reaction pressure of preferably 150 to 400 kPa.

The catalyst used in the present invention comprises a fluid catalytic cracking catalyst and an additive.

The fluid catalytic cracking catalyst comprises an active component that is a zeolite and a matrix that is a supporting material for the zeolite.

The main component of the zeolite is an ultrastable Y type zeolite.

The matrix comprises an active matrix, a binder (silica or the like), a filler (clay mineral or the like), and other components (rare-earth metal oxide, metal trap component or the like).

The active matrix has a cracking activity and may be alumina or silica-alumina.

When a heavy feedstock is subjected to fluid catalytic cracking, a fluid catalytic cracking catalyst generally contains an active matrix so as to crack crudely the feedstock to be in such a form that can be cracked with an ultrastable Y type zeolite, but a catalyst with a less content of an active matrix can obtain a higher cracking activity under the preferable conditions for the present invention. The fluid catalytic cracking catalyst of the present invention has a ratio of (Wmat/Wusy) of an active matrix weight (Wmat) to an ultrastable Y type zeolite weight (Wusy) in the range of necessarily 0 to 0.3, preferably 0 to 0.28.

If the ratio of (Wmat/Wusy) of an active matrix weight (Wmat) to an ultrastable Y type zeolite weight (Wusy) exceeds 0.3, the cracking rate of a heavy oil tends to be reduced, and the coke selectivity relative to the cracking rate will be high, resulting a decrease in the yield of light olefins.

The content of the rare-earth metal oxide in the fluid catalytic cracking catalyst is preferably 1.5 percent by mass or less, more preferably 1.2 percent by mass or less, particularly preferably 1.0 percent by mass or less. If the content of the rare-earth metal oxide in the fluid catalytic cracking catalyst is more than 1.5 percent by mass, the resulting catalyst will be too high in hydrogen transfer activity and thus be decreased in the yield of light olefins though be high in cracking activity.

In general, the more the content of the rare earth oxide in the fluid catalytic cracking catalyst is, the higher the heat resistance is, and the higher the equilibrium catalyst activity is. Whilst, an equilibrium catalyst containing a large amount of a rare-earth metal oxide will be also high in hydrogen transfer activity. When the fluid catalytic cracking catalyst is high in hydrogen transfer activity, the resulting product is decreased in the amount of olefin but increased in the amount of paraffin. Olefins in a gasoline fraction are mainly cracked to light olefins with an additive containing a shape selectivity zeolite described later. However, since the cracking rate of paraffins in a gasoline fraction with the additive is significantly slower that of olefins, the higher the hydrogen transfer activity of the fluid catalytic cracking catalyst is, the slower the production rate of light olefins with the additive is.

The ultrastable Y type zeolite has a crystal lattice constant of preferably 24.20 to 24.60Å, more preferably 24.36 to 24.45Å. Within these ranges, the smaller that crystal lattice constant is, the lesser the gasoline yield is but the more the light olefin yield is. However, if the crystal lattice constant is smaller than 24.20Å, the resulting fluid catalytic cracking catalyst is too low in cracking activity to obtain a high conversion rate and is decreased in the light olefin yield. If the lattice constant is larger than 24.60Å, the resulting catalyst will be too high in hydrogen transfer activity.

The crystal lattice constant of a zeolite referred herein is measured in accordance with ASTM D-3942-80.

The content of the ultrastable Y type zeolite in the fluid catalytic cracking catalyst is preferably 5 to 50 percent by mass, more preferably 15 to 40 percent by mass. The fluid catalytic cracking catalyst preferably has a bulk density of 0.5 to 1.0 g/ml, an average particle diameter of 50 to 90 µm, a surface area of 50 to 350 m²/g, and a pore volume of 0.05 to 0.5 ml/g.

The additive that is a constituent of the catalyst used in the present invention contains a shape selectivity zeolite. Examples of constituents other than the shape selectivity zeolite include binders (silica or the like), fillers (clay mineral or the like) and the like.

The shape selectivity zeolite is a zeolite with a pore size smaller than that of the Y type zeolite so that only hydrocarbons with limited shapes can enter the pores. Examples of such zeolites include ZSM-5, β, omega, SAPO-5, SAPO-11, SAPO-34, and pentasil type metallosilicate. Among these shape selectivity zeolites, ZSM-5 is most preferably used.

The content of the shape selectivity zeolite in the additive is preferably from 20 to 70 percent by mass, more preferably from 30 to 60 percent by mass. The additive has preferably a bulk density of 0.5 to 1.0 g/ml, an average particle diameter of 50 to 90 µm, a surface area of 10 to 200 m²/g, and a pore volume of 0.01 to 0.3 ml/g.

The ratio of the fluid catalytic cracking catalyst and additive in the catalyst used in the present invention is 50 to 95 percent by mass, preferably 55 to 90 percent by mass of the fluid catalytic cracking catalyst and 5 to 50 percent by mass, preferably 10 to 45 percent by mass of the additive containing a shape selectivity zeolite. If the ratio of the fluid catalytic cracking catalyst is less than 50 percent by mass, or the ratio of the additive is more than 50 percent by mass, the conversion rate of a feedstock that is a heavy oil will be decreased and a higher light olefin yield cannot be obtained. Whilst, the ratio of the fluid catalytic cracking catalyst is more than 95 percent by mass, or the ratio of the additive is less than 5 percent by mass, a high conversion rate can be obtained but a higher light olefin yield cannot be obtained.

### Examples

Hereinafter, the present invention will be described in more detail by way of the following examples, which should not be construed as limiting the scope of the invention.

### (Example 1)

Fluid catalytic cracking of a heavy oil was carried our using a downflow reactor (downer) type FCC pilot unit. The scale of the device includes an inventory of 5 kg and a feed amount of 1 kg/h while the operation conditions include a reaction zone outlet temperature of 600°C, a reaction pressure of 196 kPa (1.0 kg/cm²G), a catalyst/oil ratio of 25 weight/weight, and a catalyst regeneration zone temperature of 720°C. The residence time of hydrocarbon in the reactor was 0.5 second. The feedstock used in this example was a desulfurized atmospheric residue (desulfurized AR) of an oil produced in the Middle East (Arabian light). The catalyst used in this example was a mixture of 75 percent by mass of fluid catalytic cracking catalyst (A) and 25 percent by mass of an additive containing ZSM-5 (produced by Davison under the trade name of OlefinsMax). Fluid catalytic cracking catalyst (A) contains an active matrix and an ultrastable Y type zeolite at a ratio (Wmat/Wusy) of the active matrix weight (Wmat) to the ultrastable Y type zeolite weight (Wusy) of 0 (zero), and has a crystal lattice constant of 24.40Å. Prior to being fed to the unit, fluid catalytic cracking catalyst (A) and the additive were separately subjected to steaming at 810°C for 6 hours with 100% steam. The results of the cracking reaction are set forth in Table 1.

### (Example 2)

Fluid catalytic cracking of a heavy oil was conducted under the same conditions as those of Example 1 using the same unit as that of Example 1. The feedstock used in this example is the same as the desulfurized atmospheric residue (desulfurized AR) of an oil produced in the Middle East (Arabian light) used in Example 1. Fluid catalytic cracking catalyst (B) used in this example contains an active matrix and an ultrastable Y type zeolite at a ratio (Wmat/Wusy) of the active matrix weight (Wmat) to the ultrastable Y type zeolite weight (Wusy) of 0.13. The results of the cracking reaction are set forth in Table 1.

### (Example 3)

Fluid catalytic cracking of a heavy oil was conducted under the same conditions as those of Example 1 using the same unit as that of Example 1. The feedstock used in this example is the same as the desulfurized atmospheric residue (desulfurized AR) of an oil produced in the Middle East (Arabian light) used in Example 1. Fluid catalytic cracking catalyst (C) used in this example contains an active matrix and an ultrastable Y type zeolite at a ratio (Wmat/Wusy) of the active matrix weight (Wmat) to the ultrastable Y type zeolite weight (Wusy) of 0.26, and has a rare-earth metal oxide content of 1.50 percent by mass. The results of the cracking reaction are set forth in Table 1.

### (Example 4)

Fluid catalytic cracking of a heavy oil was conducted under the same conditions as those of Example 1 using the same unit as that of Example 1. The feedstock used in this example is a desulfurized vacuum gas oil (desulfurized VGO) of the same oil produced in the Middle East (Arabian light) used in Example 1. Fluid catalytic cracking catalyst (A) used in this example contains an active matrix and an ultrastable Y type zeolite at a ratio (Wmat/Wusy) of the active matrix weight (Wmat) to the ultrastable Y type zeolite weight (Wusy) of 0 (zero). The results of the cracking reaction are set forth in Table 1.

### (Example 5)

Fluid catalytic cracking of a heavy oil was conducted under the same conditions as those of Example 1 using the same unit as that of Example 1. The feedstock used in this example is a desulfurized vacuum gas oil (desulfurized VGO) of the same oil produced in the Middle East (Arabian light) used in Example 1. Fluid catalytic cracking catalyst (B) used in this example contains an active matrix and an ultrastable Y type zeolite at a ratio (Wmat/Wusy) of the active matrix weight (Wmat) to the ultrastable Y type zeolite weight (Wusy) of 0.13. The results of the cracking reaction are set forth in Table 1.

### (Example 6)

Fluid catalytic cracking of a heavy oil was conducted under the same conditions as those of Example 1 using the same unit as that of Example 1. The feedstock used in this example is a desulfurized vacuum gas oil (desulfurized VGO) of the same oil produced in the Middle East (Arabian light) used in Example 1. Fluid catalytic cracking catalyst (C) used in this example contains an active matrix and an ultrastable Y type zeolite at a ratio (Wmat/Wusy) of the active matrix weight (Wmat) to the ultrastable Y type zeolite weight (Wusy) of 0.26, and has a rare-earth metal oxide content of 1.50 percent by mass. The results of the cracking reaction are set forth in Table 1.

### (Example 7)

Fluid catalytic cracking of a heavy oil was carried out under the same conditions as those of Example 2 except for using a catalyst that is a mixture of 53 percent by mass of fluid catalytic cracking catalyst (B) and 47 percent by mass of an additive containing ZSM-5 (produced by Davison under the trade name of OlefinsMax). The results of the cracking reaction are set forth in Table 1.

### (Comparative Example 1)

Fluid catalytic cracking of a heavy oil was conducted under the same conditions as those of Example 1 using the same unit as that of Example 1. The feedstock used in this example is the same as the desulfurized atmospheric residue (desulfurized AR) of an oil produced in the Middle East (Arabian light) used in Example 1. Fluid catalytic cracking catalyst (D) used in this example contains an active matrix and an ultrastable Y type zeolite at a ratio (Wmat/Wusy) of the active matrix weight (Wmat) to the ultrastable Y type zeolite weight (Wusy) of 0.50, and has a rare-earth metal oxide content of 0 (zero). The results of the cracking reaction are set forth in Table 1.

### (Comparative Example 2)

Fluid catalytic cracking of a heavy oil was conducted under the same conditions as those of Example 1 using the same unit as that of Example 1. The feedstock used in this example is the same as the desulfurized vacuum gas oil (desulfurized VGO) of an oil produced in the Middle East (Arabian light) used in Example 4. Fluid catalytic cracking catalyst (D) used in this example contains an active matrix and an ultrastable Y type zeolite at a ratio (Wmat/Wusy) of the active matrix weight (Wmat) to the ultrastable Y type zeolite weight (Wusy) of 0.50, and has a rare-earth metal oxide content of 0 (zero). The results of the cracking reaction are set forth in Table 1.

### (Comparative Example 3)

Fluid catalytic cracking of a heavy oil was carried out using an upflow reactor (riser) type FCC pilot unit. The scale of the device includes an inventory of 3 kg and a feed amount of 1kg/h, and the operation conditions include a reaction zone outlet temperature of 520°C, a reaction pressure of 196 kPa (1.0 kg/cm²G), a catalyst/oil ratio of 5 weight/weight, and a catalyst regeneration zone temperature of 720°C. The residence time of hydrocarbon in this reactor was 1.5 second. The feedstock used in this example was a desulfurized atmospheric residue (desulfurized AR) of an oil produced in the Middle East (Arabian light). The catalyst used this example was a mixture of 75 percent by mass of fluid catalytic cracking catalyst (A) and 25 percent by mass of an additive containing ZSM-5 (produced by Davison under the trade name of OlefinsMax). Fluid catalytic cracking catalyst (A) contains an active matrix and an ultrastable Y type zeolite at a ratio (Wmat/Wusy) of the active matrix weight (Wmat) to the ultrastable Y type zeolite weight (Wusy) of 0 (zero), and has a crystal lattice constant of 24.40Å. Prior to being fed to the unit, fluid catalytic cracking catalyst (A) and the additive were separately subjected to steaming at 810°C for 6 hours with 100% steam. The results of the cracking reaction are set forth in Table 1.

### (Comparative Example 4)

Fluid catalytic cracking of a heavy oil was conducted under the same conditions as those of Example 3 using the same unit as that of Example 3. The feedstock used in this example is a desulfurized atmospheric residue (desulfurized AR) of an oil produced in the Middle East (Arabian light) used in Example 1. The catalyst used in this example is the same as fluid catalytic cracking catalyst (B) used in Example 2, which contains an active matrix and an ultrastable Y type zeolite at a ratio (Wmat/Wusy) of the active matrix weight (Wmat) to the ultrastable Y type zeolite weight (Wusy) of 0.13. The results of the cracking reaction are set forth in Table 1.

### (Comparative Example 5)

Fluid catalytic cracking of a heavy oil was carried out under the same conditions as those of comparative Example 3 using the same unit as that of Comparative Example 3. The feedstock used in this example is a desulfurized atmospheric residue (desulfurized AR) of the same oil produced in the Middle East (Arabian light) used in Example 1. Fluid catalytic cracking catalyst (C) used in this example contains an active matrix and an ultrastable Y type zeolite at a ratio (Wmat/Wusy) of the active matrix weight (Wmat) to the ultrastable Y type zeolite weight (Wusy) of 0.26, and has a rare-earth metal oxide content of 1.50 percent by mass. The results of the cracking reaction are set forth in Table 1.

### (Reference Example 1)

Fluid catalytic cracking of a heavy oil was carried out under the same operation conditions as those of Example 5 except for using an upflow reactor (riser) type FCC pilot unit instead of the downflow reactor (downer) type FCC pilot unit. The results are set forth in Table 1.

Since in the riser reaction zone, the residence time is partially extended due to the influence of back mixing, excessive cracking of a gasoline fraction was advanced and dry gas increased, resulting in a decrease in the liquid yield comparing with the results of Example 5 using the downer reaction zone.

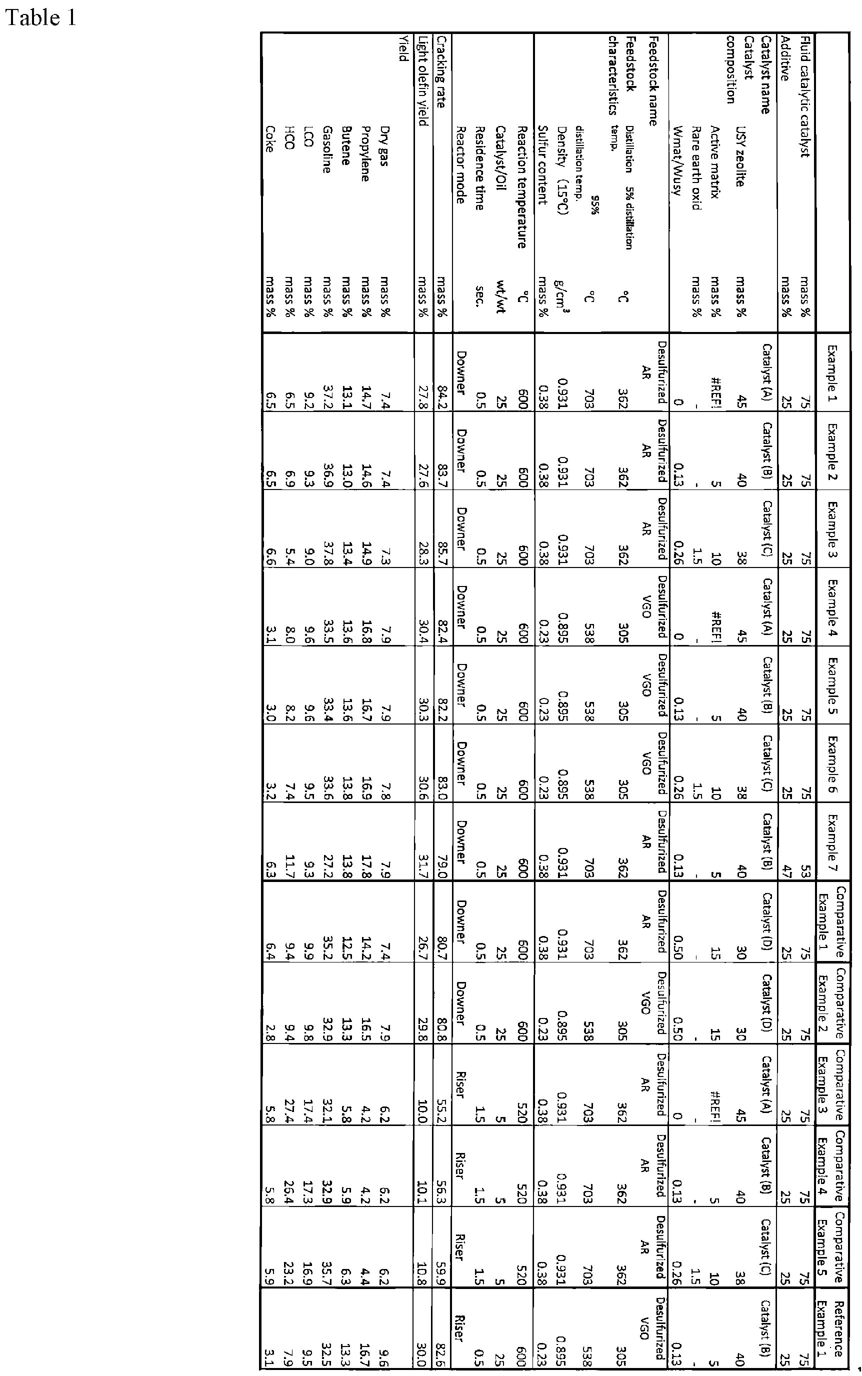

### Description of reference numerals

- 1: downflow type reaction zones
- 2: gas-solid separation zone
- 3: stripping zone
- 4: catalyst regeneration zone
- 5: riser type regenerator
- 6: catalyst reservoir
- 7: mix zone
- 8: secondary separator
- 9: dipleg
- 13: first flow rate regulator
- 15: cyclone
- 16: third flow rate regulator
- 17: second flow rate regulator

## Claims

1. A process for fluid catalytic cracking of a heavy oil to produce light olefins, comprising contacting the heavy oil with a catalyst comprising as a constituent thereof a fluid catalytic cracking catalyst with a weight ratio (Wmat/Wusy) of an active matrix weight (Wmat) to an ultrastable Y type zeolite weight (Wusy) of 0 to 0.3, under conditions where the reaction zone outlet temperature is from 580 to 630 °C, the catalyst/oil ratio is from 15 to 40 weight/weight and the residence time of hydrocarbon in the reaction zone is from 0.1 to 1.0 second.

2. The process for fluid-catalytic cracking of heavy oil according to claim 1 wherein the catalyst comprises 50 to 95 percent by mass of the fluid catalytic cracking catalyst and 5 to 50 percent by mass of an additive comprising a shape selectivity zeolite.

3. The process for fluid-catalytic cracking of heavy oil according to claim 1 or 2 wherein the content of the ultrastable Y type zeolite in the fluid catalytic cracking catalyst is from 5 to 50 percent by mass.

4. The process for fluid-catalytic cracking of heavy oil according to any one of claims 1 to 3 wherein the ultrastable Y type zeolite has a crystal lattice constant of 24.20 to 24.60Å.

5. The process for fluid-catalytic cracking of heavy oil according to any one of claims 1 to 4 wherein the content of a rare-earth metal oxide in the fluid catalytic cracking catalyst is 1.5 percent by mass or less.

6. The process for fluid-catalytic cracking of heavy oil according to any one of claims 1 to 5 wherein a fluid catalytic cracking reactor having a downflow type reaction zone, a gas-solid separation zone, a stripping zone and a catalyst regeneration zone is used.
